# FASCICULE DE BREVET EUROPEEN

(11) **EP 4 005 781 B1**
(45) Date de publication et mention de la délivrance du brevet: **22.11.2023**
(21) Numéro de dépôt: 21209729.9
(22) Date de dépôt: 22.11.2021
(51) Int. Cl.: B29C 70/44, B29D 99/00, B64C 1/06, B64C 3/18, B29L 31/30

(54) **OUTILLAGE**
WERKZEUG
TOOL

(30) Priorité: 30.11.2020 FR 2012352
(43) Date de publication de la demande: 01.06.2022
(73) Titulaire: Airbus Operations SAS, 31060 Toulouse (FR)
(72) Inventeur: PENVEN, Benoît, 31060 TOULOUSE (FR); VIVIEN, Guillaume, 31060 TOULOUSE (FR); FORDOS, Nicolas, 31060 TOULOUSE (FR); PRIDIE, Jago, 31060 TOULOUSE (FR)
(74) Mandataire: Fantin, Laurent

(56) Documents cités:
- US-A1- 2013 168 009
- US-A1- 2014 352 877

## Description

La présente demande se rapporte à un outillage de consolidation ou de polymérisation d'un panneau raidi comprenant des renforts avec des extrémités biseautées.

Un panneau raidi comprend un panneau, sous la forme d'une plaque, ainsi que des renforts, rapportés sur une face du panneau, s'étendant selon au moins une direction dans un plan sensiblement perpendiculaire au panneau.

Selon un mode de réalisation décrit dans le document FR2942165 et visible sur les figures 1 et 2, les renforts sont obtenus à partir de préformes de fibres 10 ayant chacune une section transversale en U, avec une base 12 et deux ailes 14, 16, sensiblement constante selon une direction longitudinale. Ainsi, chaque extrémité des ailes 14, 16 présente un chant d'extrémité 18 sensiblement perpendiculaire à la direction longitudinale. Selon un mode opératoire, chaque préforme de fibres 10 est positionnée sur un premier outillage 20 puis les différents premiers outillages 20 sont agencés sur un support 22, les bases 12 des différentes préformes de fibres 10 étant orientées vers le haut, les ailes 14, 16 de deux préformes de fibres 10 adjacentes étant plaquées l'une contre l'autre. En suivant, des profilés 24 avec une section en tête de clou sont positionnés au niveau des plans de jonction des préformes de fibres 10, puis des plis de fibres 26 sont rapportés sur les bases 12 des préformes de fibres 10. Les fibres des préformes 10 et des plis 26 peuvent être sèches ou pré-imprégnées. En suivant, les préformes de fibres 10 et les plis de fibres 26 sont consolidés simultanément ou co-cuits, avec un apport de résine si les fibres des préformes 10 et des plis 26 sont sèches. A l'issue de cette étape de consolidation ou de polymérisation, on obtient un panneau raidi, les plis de fibres 26 et les bases 12 des préformes de fibres 10 noyés dans une matrice de résine formant le panneau du panneau raidi, les ailes 14, 16 des préformes de fibres 10 formant les renforts du panneau raidi. Ce mode opératoire permet d'obtenir une continuité des fibres entre les renforts et le panneau ce qui confère au panneau raidi des caractéristiques mécaniques élevées.

A l'issue de l'étape de consolidation ou de polymérisation, pour limiter les concentrations de contraintes au niveau de chacune des extrémités des renforts, ces dernières sont usinées de manière à obtenir une forme en biseau appelée SRO (pour Stringer Run-Out en anglais), puis un revêtement est appliqué sur les zones usinées afin de les protéger.

Ce mode de réalisation n'est pas pleinement satisfaisant car les opérations d'usinage des extrémités des renforts et d'application d'un revêtement sur les zones usinées sont relativement longues et demandent beaucoup de minutie.

US2014352877A1 divulgue un outillage selon le préambule de la revendication 1.

La présente invention vise à remédier à tout ou partie des inconvénients de l'art antérieur. A cet effet, l'invention a pour objet un outillage de consolidation ou de polymérisation d'un panneau raidi comprenant un panneau ainsi que des renforts rapportés sur une face interne du panneau et parallèles entre eux, au moins l'un des renforts comportant au moins un chant d'extrémité biseauté, le panneau raidi étant obtenu à partir de préformes de fibres présentant chacune au moins une base et au moins une aile comportant des chants d'extrémité, les chants d'extrémité des ailes des préformes de fibres correspondant au chant d'extrémité biseauté du renfort étant biseautés avant une étape de consolidation ou de polymérisation du panneau raidi.

Selon l'invention, l'outillage comprend un premier moule pour chaque préforme de fibres, un insert pour chaque chant d'extrémité biseauté des renforts contre lequel sont plaqués en fonctionnement des chants d'extrémité biseautés des ailes de deux préformes de fibres plaquées l'une contre l'autre pour former le renfort ainsi qu'au moins un élément de maintien et de positionnement reliant les inserts entre eux.

Cet outillage permet d'obtenir un panneau raidi qui comprend au moins un renfort avec au moins un chant d'extrémité biseauté sans qu'il soit nécessaire d'usiner ce dernier après une étape de consolidation ou de polymérisation, ledit panneau raidi possédant des caractéristiques mécaniques aussi élevées que celles procurées par le premier mode de réalisation de l'art antérieur.

Selon une autre caractéristique, l'outillage comprend un cadre reliant les inserts entre eux et délimitant un contour du panneau du panneau raidi.

Selon une autre caractéristique, l'outillage comprend une contreplaque reliant les inserts entre eux, ladite contreplaque étant configurée pour être plaquée, lors de l'étape de consolidation ou de polymérisation, contre au moins un pli ou une préforme de fibres rapporté(e) sur les bases des préformes de fibres et formant le panneau du panneau raidi. Selon une autre caractéristique, l'outillage comprend au moins un système d'étanchéité entre les inserts et les premiers moules.

Selon une autre caractéristique, chaque insert comprend une surface de contact configurée pour être en contact avec un des chants d'extrémité d'une aile d'une préforme de fibres ainsi qu'avec le pan incliné situé dans le prolongement du chant d'extrémité.

Selon une autre caractéristique, le système d'étanchéité comprend un revêtement élastique, à faible coefficient de dilatation, recouvrant chaque surface de contact, qui s'étend de part et d'autre de l'insert de manière à être comprimé entre les premiers moules positionnés de part et d'autre de l'insert.

Selon une autre caractéristique, l'insert est réalisé entièrement dans un matériau élastique à faible coefficient de dilatation.

Selon une autre caractéristique, l'outillage comprend un support sur lequel sont positionnés les inserts ainsi que les premiers moules.

Selon une autre caractéristique, le support comporte une surface de pose qui présente une courbure identique à celle du panneau raidi à réaliser.

D'autres caractéristiques et avantages ressortiront de la description de l'invention qui va suivre, description donnée à titre d'exemple uniquement, en regard des dessins annexés parmi lesquels :
- la figure 1 est une vue en perspective d'une préforme de fibres utilisée dans un procédé de fabrication d'un panneau raidi selon un mode de réalisation de l'art antérieur,
- la figure 2 est une coupe transversale de préformes et de plis de fibres lors d'une étape de polymérisation illustrant un mode de réalisation de l'art antérieur,
- la figure 3 est une vue en perspective de préformes de fibres illustrant un mode de réalisation de l'invention,
- la figure 4 est une coupe d'une aile de la préforme de fibres visible sur la figure 3 illustrant un mode de réalisation de l'invention,
- la figure 5 est une coupe d'une extrémité de la préforme de fibres visible sur la figure 3 illustrant un mode de réalisation de l'invention,
- la figure 6 est une coupe des ailes de deux préformes de fibres juxtaposées illustrant un mode de réalisation de l'invention,
- la figure 7 est une coupe des extrémités de deux préformes de fibres juxtaposées illustrant un mode de réalisation de l'invention,
- la figure 8 est une vue en perspective d'une partie d'un outillage de consolidation ou de polymérisation d'un panneau raidi illustrant un premier mode de réalisation de l'invention,
- la figure 9 est une vue en perspective d'un outillage de consolidation ou de polymérisation d'un panneau raidi illustrant le premier mode de réalisation de l'invention,
- la figure 10 est une vue en perspective de l'outillage visible sur la figure 9 dans lequel sont positionnées des préformes de fibres telles qu'illustrées sur la figure 3,
- la figure 11 est une vue en perspective d'une partie de l'outillage visible sur la figure 9 illustrant le premier mode de réalisation de l'invention,
- la figure 12 est une vue en perspective d'une partie de l'outillage visible sur la figure 9 illustrant le premier mode de réalisation de l'invention,
- la figure 13 est une vue en perspective d'un panneau raidi illustrant un mode de réalisation de l'invention,
- la figure 14 est une vue en perspective agrandie d'une zone A de la figure 13,
- la figure 15 est une vue en perspective agrandie d'une zone B de la figure 13,
- la figure 16 est une vue en perspective d'une partie d'un outillage de consolidation ou de polymérisation d'un panneau raidi illustrant un deuxième mode de réalisation de l'invention, et
- la figure 17 est une coupe schématique d'un outillage de consolidation ou de polymérisation d'un panneau raidi illustrant le deuxième mode de réalisation de l'invention.

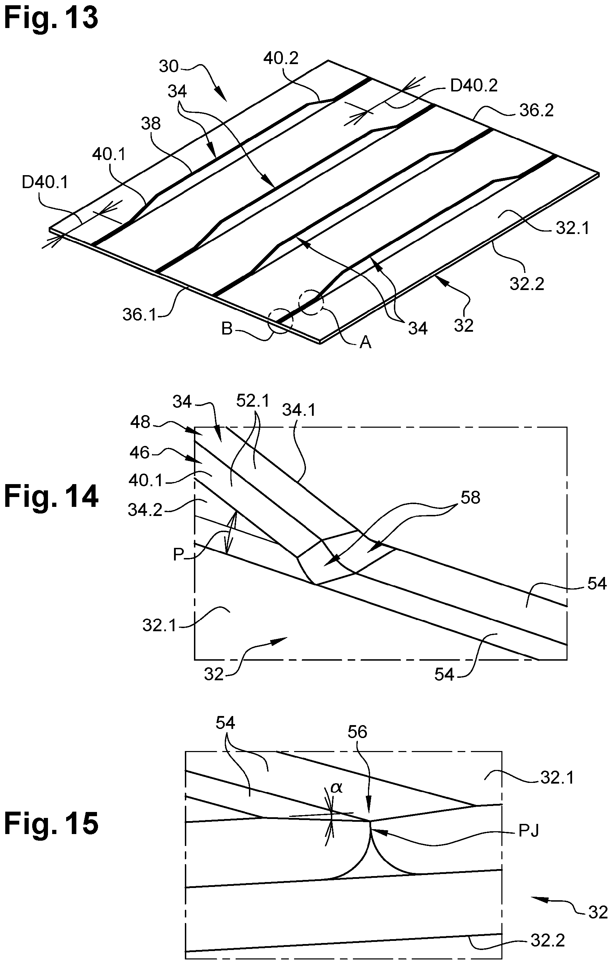

Selon un mode de réalisation visible sur les figures 13 à 15, un panneau raidi 30 comprend un panneau 32 présentant des première et deuxième faces 32.1, 32.2 ainsi que des renforts 34 positionnés sur la première face 32.1 du panneau 32, perpendiculaires à cette dernière. Selon une configuration, les renforts 34 sont orientés selon une direction unique et sont parallèles entre eux. Pour la suite de la description, les renforts 34 sont orientés selon une direction longitudinale.

Le panneau 32 comprend des premier et deuxième bords 36.1, 36.2 orientés selon une direction sécante à la direction longitudinale. Selon une configuration, le panneau 32 a une épaisseur (distance entre les première et deuxième faces 32.1, 32.2) sensiblement constante et nettement inférieure aux autres dimensions du panneau 32. Sur la figure 13, les première et deuxième faces 32.1, 32.2 sont planes. En variante, elles pourraient être courbes. Les premier et deuxième bords 36.1, 36.2 sont sensiblement perpendiculaires à la direction longitudinale.

Chaque renfort 34 présente des première et deuxième faces 34.1, 34.2, un premier chant 38 distant de la première face 32.1 du panneau 32, sensiblement parallèle à cette dernière, ainsi que des premier et deuxième chants d'extrémité 40.1, 40.2. Au moins un premier ou deuxième chant d'extrémité 40.1, 40.2 d'au moins un renfort 34 est biseauté. Ainsi, il n'est pas perpendiculaire à la direction longitudinale mais incliné. Selon une configuration, les chants d'extrémités 40.1, 40.2 de tous les renforts 34 sont biseautés. A titre indicatif, les premier et deuxième chants d'extrémités 40.1, 40.2 présentent une pente p, correspondant à l'angle formé entre les chants d'extrémités 40.1, 40.2 et la première face 32.1 du panneau 32, inférieure à 60°.

Selon un mode de réalisation, pour au moins un des renforts 34, au moins l'un des premier et deuxième chants d'extrémité 40.1, 40.2 est distant des premier et deuxième bords 36.1, 36.2 du panneau 32. Ainsi, le chant d'extrémité 40.1 ou 40.2 est séparé du bord 36.1 ou 36.2 du panneau 32 d'une distance D40.1 ou D40.2.

Chaque renfort 34 présente un profil donné correspondant aux géométries du premier chant 38 ainsi que des premier et deuxième chants d'extrémité 40.1, 40.2.

Selon une configuration, les renforts 34 et leurs premiers chants 38 sont sensiblement rectilignes. En variante, les renforts 34 et/ou les premiers chants 38 pourraient être courbes. Selon une application donnée à titre d'exemple et non limitative, un caisson central de voilure d'un aéronef peut comprendre au moins un tel panneau raidi.

Selon un mode de réalisation, un procédé de fabrication d'un panneau raidi comprend une étape d'obtention de préformes de fibres 42 avec une section transversale en U comportant une base 44 et des première et deuxième ailes 46, 48 orientées selon la direction longitudinale. En plus des préformes de fibres 42 en U, le procédé de fabrication peut comprendre une étape d'obtention de préformes de fibres avec une section transversale en L comportant une base et une seule aile. Les fibres de ces préformes de fibres 42 peuvent être sèches ou pré-imprégnées.

Chaque préforme de fibres 42 présente des première et deuxième extrémités 42.1, 42.2 séparées entre elles d'une distance D1 sensiblement égale à la distance séparant les premier et deuxième bords 36.1, 36.2 du panneau 32.

Chaque aile 46, 48 d'une préforme de fibres 42 présente un premier chant 50 distant de la base 44 ainsi que des premier et deuxième chants d'extrémité 52.1, 52.2. Ainsi, chaque aile 46, 48 présente un profil correspondant aux géométries du premier chant 50 ainsi que des premier et deuxième chants d'extrémité 52.1, 52.2 de l'aile 46, 48.

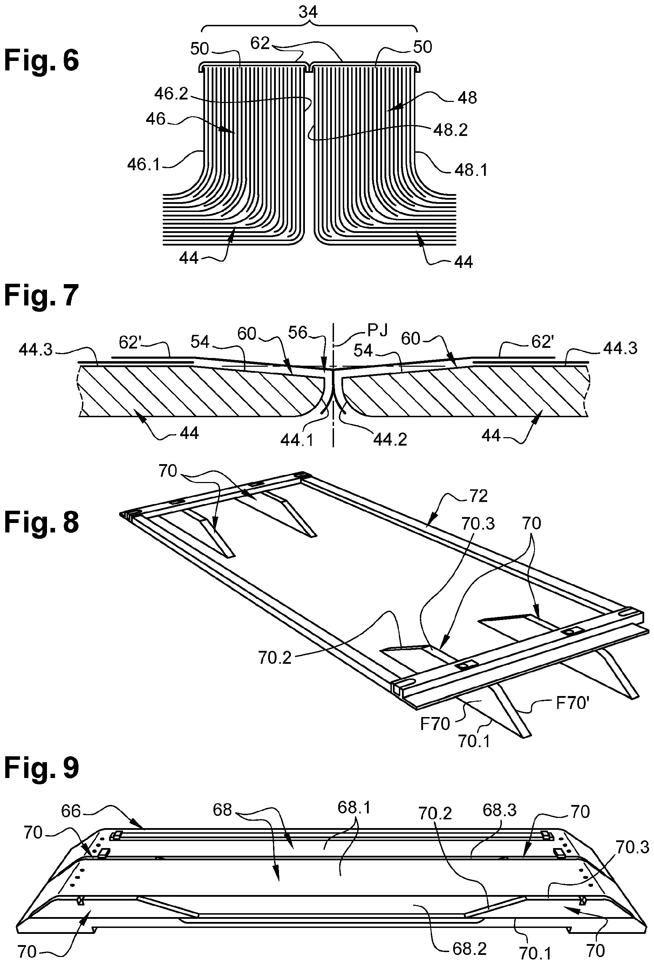

Comme illustré sur les figures 6 et 14, les première et deuxième ailes 46, 48 de deux préformes de fibres 42 plaquées l'une contre l'autre forment un renfort 34.

Chaque aile 46, 48 comprend une face interne 46.1, 48.1 orientée vers l'autre aile de la préforme de fibres 42 ainsi qu'une face externe 46.2, 48.2 opposée à la face interne 46.1, 48.1. La base 44 comprend des bords latéraux 44.1, 44.2 dans le prolongement des première et deuxième ailes 46, 48 ainsi qu'une face interne 44.3 orientée vers les première et deuxième ailes 46, 48.

Ces préformes de fibres 42 en U ou en L peuvent être réalisées de la même manière que celles décrites dans le document FR2942165. A titre indicatif, chaque préforme de fibres 42 est obtenue en drapant des plis de fibres sur un moule de section transversale rectangulaire. D'autres solutions pourraient être envisagées pour la fabrication des préformes de fibres 42. De plus, l'invention n'est pas limitée aux sections en U ou en L. Ainsi, les préformes de fibres 42 pourraient avoir des sections en C, en H, en T ou en J. Quelle que soit la section, la préforme de fibres 42 comprend au moins une base et au moins une aile, à savoir deux pans non coplanaires.

Préalablement à une étape de consolidation ou de polymérisation, pour au moins une préforme de fibres 42 en U ou en L, au moins une première ou deuxième aile 46, 48 présente un profil identique à celui d'un renfort 34 et comprend au moins un chant d'extrémité 52.1, 52.2 biseauté. Selon la configuration visible sur la figure 13, toutes les première et deuxième ailes 46, 48 présentent des premier et deuxième chants d'extrémité 52.1, 52.2 biseautés. Selon un premier mode de réalisation, l'étape d'obtention des préformes de fibres 42 en U ou en L est configurée pour obtenir des première et deuxième ailes 46, 48 avec des premier et deuxième chants d'extrémités 52.1, 52.2 perpendiculaires à la direction longitudinale ou à la base 44. Selon ce premier mode de réalisation, le procédé de fabrication du panneau raidi comprend une étape de retrait de matière pour qu'au moins un des premier et deuxième chants d'extrémités 52.1, 52.2 soit biseauté. Selon un mode opératoire, l'étape de retrait est réalisée par usinage, à l'aide d'un couteau à ultrasons ou de tout autre moyen. Selon un mode opératoire, les première et deuxième ailes 46, 48 des préformes de fibres 42 sont, si nécessaire, usinées pour que leurs profils soient sensiblement identiques à ceux des renforts 34 à réaliser et présentent des chants d'extrémité biseautés. L'usinage d'une préforme de fibres sèches génère des déchets qui peuvent être plus facilement recyclés que ceux issus de l'usinage d'une pièce en matériau composite déjà consolidée ou polymérisée.

Selon une configuration, pour une préforme de fibres 42 utilisée pour réaliser au moins partiellement deux renforts 34 adjacents, chaque chant d'extrémité 52.1, 52.2 de chaque aile 46, 48 présente une pente identique à celle du chant d'extrémité 40.1, 40.2 du renfort 34 correspondant et il est séparé de l'extrémité 42.1, 42.2 de la préforme de fibres 42 d'une distance égale à celle séparant le chant d'extrémité 40.1, 40.2 du renfort 34 et le bord 36.1 ou 36.2 du panneau 32 du panneau raidi 30 à réaliser.

Pour une première ou deuxième aile 46, 48 donnée, lorsque son chant d'extrémité 52.1, 52.2 est distant de l'extrémité 42.1, 42.2 de la préforme de fibres 42 alors la base 44 de la préforme de fibres 42 présente un pan incliné 54 dans le prolongement de l'aile 46, 48, s'étendant entre ladite aile 46, 48 et l'extrémité 42.1, 42.2 de la préforme de fibres 42, présentant une largeur sensiblement égale à l'épaisseur de l'aile 46, 48. L'inclinaison du pan incliné 54 est telle que la base 44 présente une épaisseur qui diminue en se rapprochant du bord latéral 44.1 de la base 44. Ainsi, lorsque deux préformes de fibres 42 sont juxtaposées, comme illustré sur les figures 7 et 15, les deux pans inclinés 54 juxtaposés forment un creux 56 de part et d'autre du plan de jonction PJ des deux préformes de fibres 42. Ce creux 56 permet d'être certain que le panneau raidi obtenu à partir des deux préformes de fibres 42 ne présentera pas une forme saillante au droit du plan de jonction PJ des deux préformes de fibres 42. A titre indicatif, le pan incliné 54 et la base 44 forment un angle α de l'ordre de quelques degrés, de préférence inférieur à 10°.

Si le chant d'extrémité 52.152.2 biseauté d'au moins une aile 46, 48 d'au moins une préforme de fibres 42 est distant des extrémités 42.1, 42.2 de la préforme de fibres 42 alors l'étape de retrait de matière est configurée pour réaliser le chant d'extrémité 52.1, 52.2 biseauté ainsi qu'un pan incliné 54 dans le prolongement du chant d'extrémité 52.1, 52.2 et l'extrémité 42.1, 42.2 de la préforme de fibres 42 la plus proche.

Selon une configuration, le chant d'extrémité 52.1, 52.2 biseauté d'une aile 46, 48 d'une préforme de fibres 42 et le pan incliné 54 situé dans son prolongement sont reliés par une zone de jonction courbe 58 correspondant à une portion de cylindre présentant un axe parallèle à la base 44. Ainsi, les chants d'extrémité 52.1, 52.2 et les pans inclinés 54 ne sont pas reliés par une arête vive susceptible de former une amorce de rupture. Toutefois, la zone de jonction 58 n'est pas limitée à cette forme courbe et d'autres formes peuvent être envisagées.

Lorsque les ailes 46, 48 sont usinées pour obtenir pour chacune d'elles un profil identique au renfort 34 correspondant, l'étape d'usinage est adaptée pour obtenir la pente p souhaitée pour chaque chant d'extrémité 52.1, 52.2 de chaque aile 46, 48 et l'inclinaison souhaitée pour chaque pan incliné 54 positionné dans le prolongement de chaque aile 46, 48.

Selon un deuxième mode de réalisation, l'étape d'obtention de la préforme de fibres 42 en U ou en L est configurée pour que les chants d'extrémité 52.1, 52.2 des ailes soient obtenus directement biseautés. Selon un mode opératoire, la préforme de fibres 42 est obtenue en drapant des plis de fibres qui ont une géométrie adaptée et/ou qui sont agencés entre eux de manière adaptée pour obtenir des première et deuxième ailes 46, 48 avec des chants d'extrémités 52.1, 52.2 biseautés identiques à ceux des renforts 34 à réaliser.

Quel que soit le mode de réalisation, pour chaque chant d'extrémité 40.1, 40.2 biseauté des renforts 34, les chants d'extrémité 52.1, 52.2 des ailes 46, 48 des préformes de fibres 42 correspondant au chant d'extrémité 40.1, 40.2 du renfort 34 sont biseautés avant une étape de consolidation ou de polymérisation du panneau raidi 30 de sorte que les ailes 46, 48 des préformes de fibres 42 présentent un profil identique à celui du renfort 34 avant l'étape de consolidation ou de polymérisation du panneau raidi 30. Généralement, toutes les première et deuxième ailes 46, 48 de toutes les préformes de fibres 42 en U ou en L présentent, avant une étape de consolidation ou de polymérisation des préformes de fibres 42, des profils identiques à ceux des renforts 34 à réaliser, tous leurs chants d'extrémité 52.1, 52.2 étant biseautés.

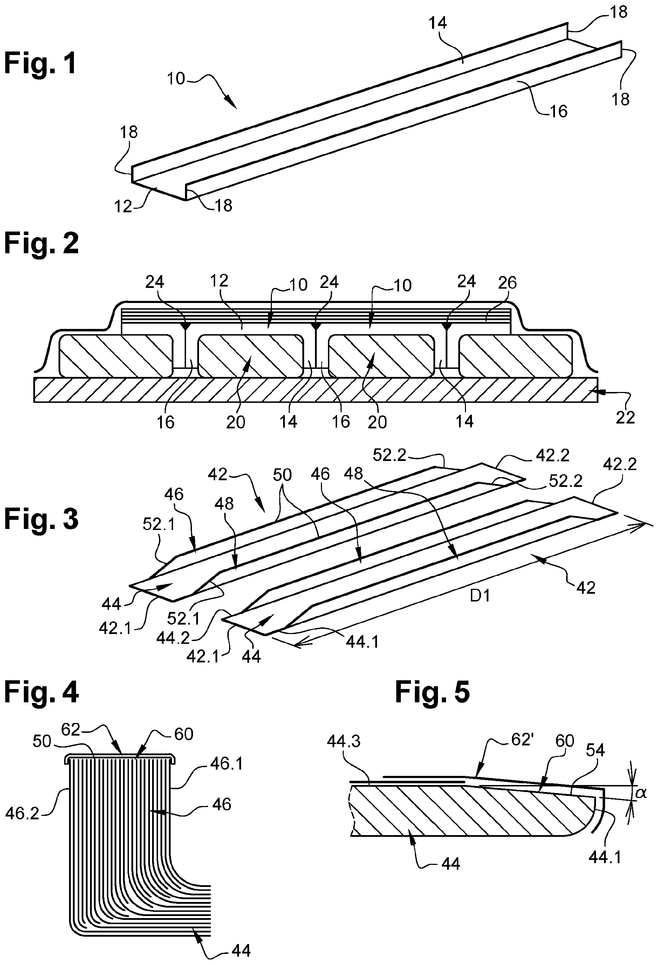

Selon un mode de réalisation, le procédé de fabrication du panneau raidi comprend au moins une étape d'application d'au moins un revêtement 62, 62' sur au moins une zone de retrait de matière 60 obtenue lors de l'étape de retrait de matière. Ainsi, les chants d'extrémité 52.1, 52.2 des première et deuxième ailes 46, 48 ainsi que les pans inclinés 54 sont recouverts d'un revêtement de protection 62, 62', comme un pli de fibres de verre par exemple. Selon un mode de réalisation, pour chaque zone de retrait de matière 60, le revêtement de protection 62, 62' s'étend au-delà de la zone de retrait de matière 60. Selon une configuration, le revêtement de protection 62 appliqué sur un chant d'extrémité 52.1 ou 52.2 d'une aile 46, 48 s'étend de part et d'autre du chant d'extrémité 52.1 ou 52.2 et recouvre légèrement les faces interne et externe 46.1, 46.2, 48.1, 48.2 de l'aile 46, 48, comme illustré sur les figures 4 et 6. Le revêtement de protection 62' appliqué sur un pan incliné 54 s'étend de part et d'autre du pan incliné 54 et recouvre le bord latéral 44.1, 44.2 de la base 44 et sa face interne 44.3, comme illustré sur les figures 5 et 7.

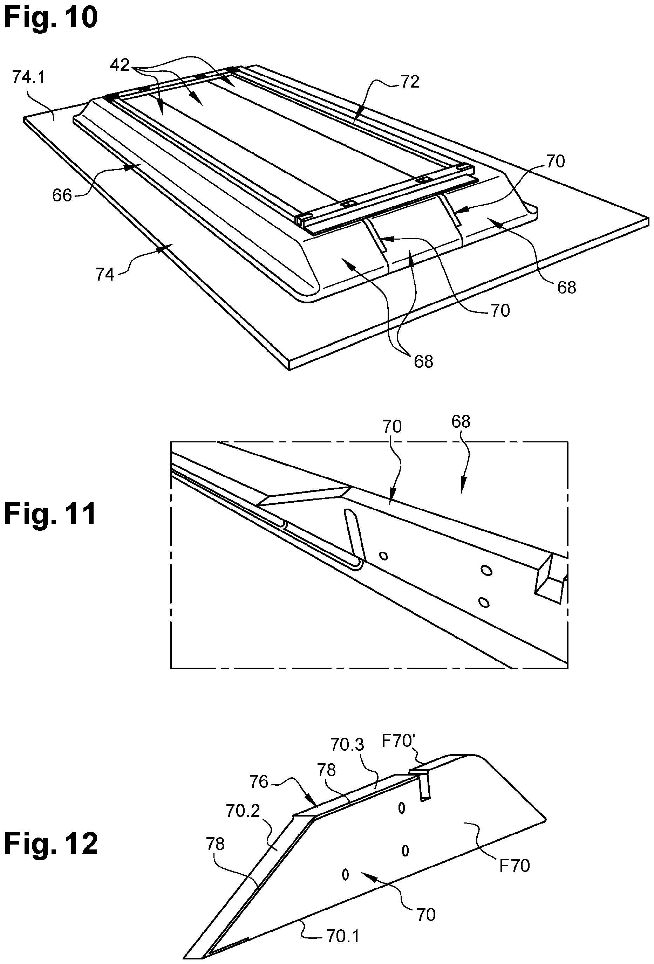

En présence d'une étape de protection, quel que soit le mode opératoire pour la réaliser, elle est réalisée préalablement à l'étape de consolidation ou de polymérisation du panneau raidi. Comme pour l'art antérieur, le procédé de fabrication de l'invention comprend une étape d'agencement des préformes de fibres 42 les unes par rapport aux autres de manière à former une face du panneau 32 et les renforts 34, une étape de dépose d'au moins un pli ou une préforme de fibres 64 (visible sur les figures 10 et 15) sur les bases 44 des préformes de fibres 42 pour former le panneau 32 du panneau raidi 30, puis une étape de consolidation ou polymérisation du panneau raidi 30. Sur la figure 10, seule une partie du pli ou de la préforme de fibres 64 est visible.

Des profilés en forme de tête de clou peuvent être positionnés au niveau des plans de jonction des préformes de fibres 42 avant la dépose des plis de fibres 64.

Ces étapes d'agencement des préformes de fibres 42, de dépose d'au moins un pli ou une préforme de fibres 64 et de consolidation ou polymérisation ne sont pas plus décrites car elles peuvent être identiques à celles de l'art antérieur.

Pour ces différentes étapes, un outillage 66 de consolidation ou de polymérisation, tel qu'illustré sur les figures 8 à 12, 16 et 17, peut être utilisé.

Selon un premier mode de réalisation visible sur les figures 8 à 12, l'outillage 66 comprend un premier moule 68 pour chaque préforme de fibres 42, le premier moule 68 présentant une section transversale rectangulaire, une première face 68.1 en contact avec la base 44 de la préforme de fibres 42 ainsi que des deuxième et troisième faces 68.2, 68.3 en contact avec les ailes 46, 48 de la préforme de fibres 42 parallèles entre elles et perpendiculaires à la première face 68.1 du moule. Les mêmes moules peuvent être utilisés pour fabriquer les préformes de fibres 42 et pour les agencer les unes par rapport aux autres.

L'outillage 66 comprend également un insert 70 pour chaque chant d'extrémité 40.1, 40.2 biseauté des renforts 34 contre lequel sont plaqués les chants d'extrémité 52.1, 52.2 biseautés des première et deuxième ailes 46, 48 de deux préformes de fibres 42 plaquées l'une contre l'autre pour former le renfort 34 lors de l'étape de consolidation ou de polymérisation. Comme illustré sur la figure 8, l'outillage 66 comprend également un cadre 72 reliant tous les inserts 70 de manière à les maintenir immobiles les uns par rapport aux autres selon un agencement donné.

Selon une configuration, le cadre 72 est configuré de manière à délimiter le contour du panneau 32 du panneau raidi 30. Le cadre 72 permet également de garantir une distance précise entre deux inserts 70 en contact avec les chants d'extrémité 40.1, 40.2 biseauté des renforts 34 lors de l'expansion du moule durant la polymérisation du panneau raidi 30. Chaque insert 70 comprend une base 70.1 destinée à reposer sur le support 74. La surface de contact 78 comprend une première partie 70.2 formant un angle aigu avec la base 70.1 sensiblement égal à l'angle formé entre un chant d'extrémité 40.1, 40.2 biseauté et le panneau 32 ainsi qu'une deuxième partie 70.3 sensiblement parallèle à la base 70.1 qui comprend deux pans inclinés, un pour chaque pan incliné 54 de la préforme 42. En complément, l'insert 70 comprend deux faces opposées F70, F70' configurées pour être plaquées contre les premiers moules 68 positionnés de part et d'autre de l'insert 70. L'outillage 66 comprend également un support 74 (visible sur la figure 10) sur lequel sont positionnés les inserts 70 reliés par le cadre 72 ainsi que les premiers moules 68. Le support 74 comporte une surface de pose 74.1 qui présente une courbure identique à celle du panneau raidi à réaliser. Ainsi, selon une configuration, la surface de pose 74.1 pourrait être plane si les première et deuxième faces 32.1, 32.2 du panneau 32 étaient planes.

En fonctionnement, les inserts 70 sont positionnés entre deux premiers moules 68, comme illustré sur la figure 9. L'outillage 66 comprend au moins un système d'étanchéité 76 entre les inserts 70 et les premiers moules 68. Selon un mode de réalisation, chaque insert 70 comprend une surface de contact 78 configurée pour être en contact avec un des chants d'extrémité 52.1, 52.2 d'une aile 46, 48 d'une préforme de fibres 42 ainsi qu'avec le pan incliné 54 situé dans le prolongement du chant d'extrémité.

Le système d'étanchéité 76 comprend un revêtement élastique, à faible coefficient de dilatation, recouvrant chaque surface de contact 78, qui s'étend de part et d'autre de l'insert 70 de manière à être comprimé entre les premiers moules 68 positionnés de part et d'autre de l'insert 70. En variante, l'insert 70 peut être réalisé entièrement dans ce matériau élastique à faible coefficient de dilatation. Cette solution permet de garantir une étanchéité parfaite entre l'insert 70 et les premiers moules 68 durant la polymérisation.

Les fibres des préformes 42 et des plis 64 peuvent être sèches. Dans ce cas, l'outillage 66 comprend au moins une alimentation de résine.

Les autres éléments de l'outillage ne sont pas plus décrits car ils sont connus de l'homme du métier.

Selon un mode opératoire, le cadre 72 et les inserts 70 sont positionnés sur le support 74, puis les premiers moules 68 avec chacun une préforme de fibres 42 sont positionnés sur le support 74 entre les inserts 70. En suivant, la préforme de fibres 64 formant le panneau 32 est rapportée sur les bases 44 des préformes de fibres 42. Après la mise en place d'un habillage, les préformes de fibres 42, 44 sont consolidées ou polymérisées.

Quel que soit le mode de réalisation, lors de l'étape de consolidation ou de polymérisation, chaque préforme de fibres 42 est positionnée sur un premier moule 68 et chaque chant d'extrémité 52.1, 52.2 biseauté des ailes 46, 48, des préformes de fibres 42 est plaqué contre un insert 70 positionné entre deux premiers moules 68.

L'outillage et le procédé de fabrication d'un panneau raidi selon l'invention permet d'obtenir des caractéristiques mécaniques aussi élevées que celles procurées par le premier mode de réalisation de l'art antérieur.

Il permet de supprimer les étapes de mise en forme des renforts après l'étape de consolidation ou de polymérisation et de réduire les déchets de matériau composite produits lors de ces étapes de mise en forme.

Bien entendu, l'invention n'est pas limitée aux modes de réalisation précédemment décrits. D'autres solutions pourraient être envisagées pour maintenir les inserts 70 immobiles entre eux et garantir un positionnement précis de ces derniers.

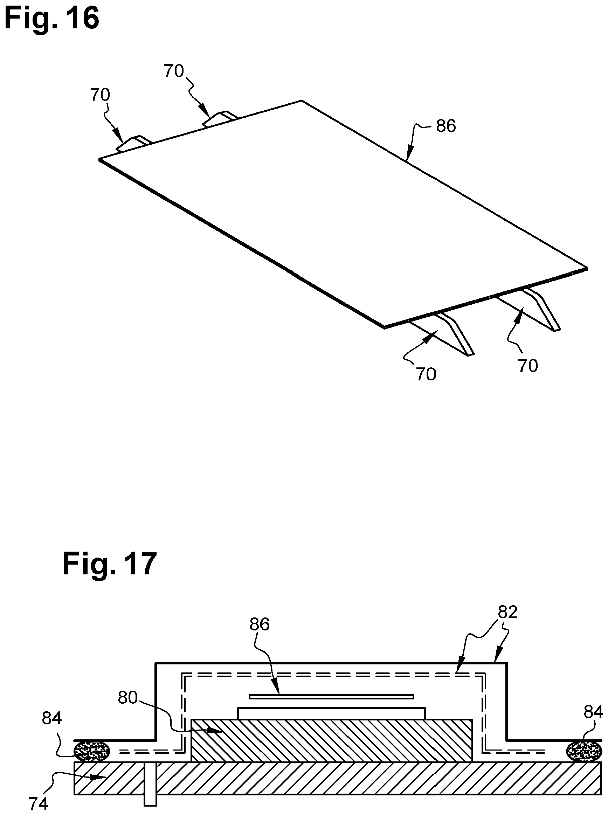

Selon un deuxième mode de réalisation visible sur les figures 16 et 17, l'outillage 66 comprend un support 74, un ensemble 80 de premiers moules, un pour chaque préforme de fibres 42, des inserts 70 positionnés entre les premiers moules, au moins un système d'étanchéité entre les inserts 70 et les premiers moules ainsi qu'un habillage 82 relié au support 74 par des éléments d'étanchéité 84.

Selon ce deuxième mode de réalisation, l'outillage 66 comprend au moins une contreplaque 86 configurée pour être plaquée, lors de l'étape de consolidation ou de polymérisation, contre au moins un pli ou une préforme de fibres 64 rapporté(e) sur les bases 44 des préformes de fibres 42 et formant le panneau 32 du panneau raidi.

Selon ce deuxième mode de réalisation, chaque insert 70 est relié à la contreplaque 86 par une liaison glissière de manière à être mobile par rapport à la contreplaque 86 selon une direction parallèle aux faces F70, F70' des inserts 70. Ainsi, pour chaque couple d'inserts 70 positionnés entre les mêmes premiers moules, les deux inserts 70 sont mobiles entre une position écartée dans laquelle les inserts 70 peuvent être posés sur le support 74 et une position resserrée dans laquelle les inserts 70 sont plaqués contre les chants d'extrémité 52.1, 52.2 des ailes 46, 48 des préformes de fibres 42.

Selon ce deuxième mode de réalisation, les inserts 70 sont reliés à cette contreplaque 86 qui assure un maintien des inserts 70 immobiles entre eux et garantit un positionnement précis de ces derniers.

Selon un mode opératoire, les premiers moules 68 sont positionnés sur le support 74 puis la préforme de fibres 64 formant le panneau 32 est rapportée sur les bases 44 des préformes de fibres 42. En suivant, la contreplaque 86 et les inserts 70 en position écartée sont mis en place, la contreplaque 86 étant rapportée contre la préforme de fibres 64. Les inserts 70 sont translatés en position resserrée. Après la mise en place d'un habillage, les préformes de fibres 42, 44 sont consolidées ou polymérisées.

Quel que soit le mode de réalisation, l'outillage 60 comprend au moins un élément de maintien et de positionnement des inserts 70, comme un cadre 72 ou une contreplaque 80 par exemple.

## Revendications

1. Outillage de consolidation ou de polymérisation d'un panneau raidi comprenant un panneau (32) ainsi que des renforts (34) rapportés sur une face interne (32.1) du panneau (32) et parallèles entre eux, au moins l'un des renforts (34) comportant au moins un chant d'extrémité (40.1, 40.2) biseauté, le panneau raidi (30) étant obtenu à partir de préformes de fibres (42) présentant chacune au moins une base (44) et au moins une aile (46, 48) comportant des chants d'extrémité (52.1, 52.2), les chants d'extrémité (52.1, 52.2) des ailes (46, 48) des préformes de fibres (42) correspondant au chant d'extrémité (40.1, 40.2) biseauté du renfort (34) étant biseautés avant une étape de consolidation ou de polymérisation du panneau raidi (30), l'outillage comprenant un premier moule (68) pour chaque préforme de fibres (42), un insert (70) pour chaque chant d'extrémité (40.1, 40.2) biseauté des renforts (34) contre lequel sont plaqués en fonctionnement des chants d'extrémité (52.1, 52.2) biseautés des ailes (46, 48) de deux préformes de fibres (42) plaquées l'une contre l'autre pour former le renfort (34) l'outillage étant **caractérisé par** au moins un élément de maintien et de positionnement reliant les inserts (70) entre eux.

2. Outillage selon la revendication précédente, **caractérisé en ce que** l'élément de maintien et de positionnement comprend un cadre (72) reliant les inserts (70) entre eux et délimitant un contour du panneau (32) du panneau raidi (30).

3. Outillage selon la revendication 1, **caractérisé en ce que** l'élément de maintien et de positionnement comprend une contreplaque (86) reliant les inserts (70) entre eux, ladite contreplaque (86) étant configurée pour être plaquée, lors de l'étape de consolidation ou de polymérisation, contre au moins un pli ou une préforme de fibres (64) rapporté(e) sur les bases (44) des préformes de fibres (42) et formant le panneau (32) du panneau raidi.

4. Outillage selon la revendication précédente, **caractérisé en ce que** chaque insert (70) est relié à la contreplaque (86) par une liaison glissière de manière à ce que, pour chaque couple d'inserts (70) positionnés entre les mêmes premiers moules (68), les inserts (70) sont mobiles entre une position écartée et une position resserrée dans laquelle les inserts (70) sont plaqués contre les chants d'extrémité (52.1, 52.2) des ailes (46, 48) des préformes de fibres (42).

5. Outillage selon l'une des revendications précédentes, **caractérisé en ce que** l'outillage comprend au moins un système d'étanchéité (76) entre les inserts (70) et les premiers moules (68).

6. Outillage selon la revendication précédente, **caractérisé en ce que** chaque insert (70) comprend une surface de contact (78) configurée pour être en contact avec un des chants d'extrémité (52.1, 52.2) d'une aile (46, 48) d'une préforme de fibres (42) ainsi qu'avec le pan incliné (54) situé dans le prolongement du chant d'extrémité.

7. Outillage selon la revendication précédente, **caractérisé en ce que** le système d'étanchéité (76) comprend un revêtement élastique, à faible coefficient de dilatation, recouvrant chaque surface de contact (78), qui s'étend de part et d'autre de l'insert (70) de manière à être comprimé entre les premiers moules (68) positionnés de part et d'autre de l'insert (70).

8. Outillage selon la revendication 6, **caractérisé en ce que** l'insert (70) est réalisé entièrement dans un matériau élastique à faible coefficient de dilatation.

9. Outillage selon l'une des revendications précédentes, **caractérisé en ce que** l'outillage (66) comprend un support (74) sur lequel sont positionnés les inserts (70) ainsi que les premiers moules (68).

10. Outillage selon la revendication précédente, **caractérisé en ce que** le support (74) comporte une surface de pose (74.1) qui présente une courbure identique à celle du panneau raidi à réaliser.

## Patentansprüche

1. Werkzeug zur Verfestigung oder Polymerisation einer versteiften Platte, die eine Platte (32) sowie Verstärkungen (34) aufweist, die an einer Innenseite (32.1) der Platte (32) angebracht und zueinander parallel sind, wobei wenigstens eine der Verstärkungen (34) wenigstens eine abgeschrägte Endkante (40.1, 40.2) aufweist, wobei die versteifte Platte (30) aus Faservorformlingen (42) erhalten wird, die jeweils wenigstens eine Basis (44) und wenigstens einen Flügel (46, 48) mit Endkanten (52.1, 52.2) aufweisen, wobei die Endkanten (52.1, 52.2) der Flügel (46, 48) der Faservorformlinge (42), die den abgeschrägten Endkanten (40.1, 40.2) der Verstärkung (34) entsprechen, vor einem Schritt des Verfestigens oder der Polymerisation der versteiften Platte (30) abgeschrägt werden, wobei das Werkzeug eine erste Form (68) für jeden Faservorformling (42) und einen Einsatz (70) für jede Endkante (40.1, 40.2) der Verstärkungen (34)aufweist, gegen die bei der Anwendung abgeschrägte Endkanten (52.1, 52.2) der Flügel (46, 48) von zwei Faservorformlingen (42) gedrückt werden, die zur Bildung der Verstärkung (34) gegeneinander gedrückt werden, wobei das Werkzeug durch wenigstens ein Halte- und Positionierelement gekennzeichnet ist, das die Einsätze (70) miteinander verbindet.

2. Werkzeug nach dem vorhergehenden Anspruch, **dadurch gekennzeichnet, dass** das Halte- und Positionierelement einen Rahmen (72) umfasst, der die Einsätze (70) miteinander verbindet und eine Kontur der Platte (32) der versteiften Platte (30) begrenzt.

3. Werkzeug nach Anspruch 1, **dadurch gekennzeichnet, dass** das Halte- und Positionierungselement eine Gegenplatte (86) umfasst, die die Einsätze (70) miteinander verbindet, wobei die Gegenplatte (86) so eingerichtet ist, dass sie während des Verfestigungs- oder Polymerisationsschritts gegen wenigstens eine Falte oder einen Faservorformling (64) gedrückt wird, die/der an den Basen (44) der Faservorformlinge (42) angebracht ist und die Platte (32) der versteiften Platte bildet.

4. Werkzeug nach dem vorhergehenden Anspruch, **dadurch gekennzeichnet, dass** jeder Einsatz (70) mit der Gegenplatte (86) durch eine Gleitverbindung verbunden ist, so dass für jedes Paar von Einsätzen (70), die zwischen denselben ersten Formen (68) positioniert sind, die Einsätze (70) zwischen einer gespreizten Position und einer verengten Position beweglich sind, in der die Einsätze (70) gegen die Endkanten (52.1, 52.2) der Flügel (46, 48) der Faservorformlinge (42) gedrückt werden.

5. Werkzeug nach einem der vorhergehenden Ansprüche,
**dadurch gekennzeichnet, dass** das Werkzeug wenigstens ein Dichtungssystem (76) zwischen den Einsätzen (70) und den ersten Formen (68) umfasst.

6. Werkzeug nach dem vorhergehenden Anspruch, **dadurch gekennzeichnet, dass** jeder Einsatz (70) eine Kontaktfläche (78) umfasst, die so eingerichtet ist, dass sie mit einer der Endkanten (52.1, 52.2) eines Flügels (46, 48) eines Faservorformlings (42) sowie mit der geneigten Fläche (54) in Kontakt steht, die sich in der Verlängerung der Endkante befindet.

7. Werkzeug nach dem vorhergehenden Anspruch, **dadurch gekennzeichnet, dass** das Dichtungssystem (76) eine elastische Beschichtung mit niedrigem Ausdehnungskoeffizienten aufweist, die jede Kontaktfläche (78) bedeckt, die sich auf beiden Seiten des Einsatzes (70) erstreckt, so dass sie zwischen den ersten Formen (68), die auf beiden Seiten des Einsatzes (70) positioniert sind, zusammengedrückt wird.

8. Werkzeug nach Anspruch 6, **dadurch gekennzeichnet, dass** der Einsatz (70) vollständig aus einem elastischen Material mit einem niedrigen Ausdehnungskoeffizienten hergestellt ist.

9. Werkzeug nach einem der vorhergehenden Ansprüche,
**dadurch gekennzeichnet, dass** das Werkzeug (66) einen Träger (74) umfasst, auf dem die Einsätze (70) sowie die ersten Formen (68) positioniert sind.

10. Werkzeug nach dem vorhergehenden Anspruch, **dadurch gekennzeichnet, dass** der Träger (74) eine Auflagefläche (74.1) aufweist, die eine Krümmung aufweist, die mit derjenigen der herzustellenden versteiften Platte identisch ist.

## Claims

1. Tool for consolidating or polymerizing a reinforced panel comprising a panel (32) and reinforcers (34) attached to an internal face (32.1) of the panel (32) and parallel to one another, at least one of the reinforcers (34) having at least one chamfered end edge face (40.1, 40.2), the reinforced panel (30) being obtained from fibre preforms (42) each having at least a base (44) and at least one flange (46, 48) having end edge faces (52.1, 52.2), the end edge faces (52.1, 52.2) of the flanges (46, 48) of the fibre preforms (42) corresponding to the chamfered end edge face (40.1, 40.2) of the reinforcer (34) being chamfered prior to a step of consolidating or polymerizing the reinforced panel (30), the tool comprising a first mould (68) for each fibre preform (42), an insert (70) for each chamfered end edge face (40.1, 40.2) of the reinforcers (34) and against which insert the chamfered end edge faces (52.1, 52.2) of the flanges (46, 48) of two fibre preforms (42) that are pressed against one another to form the reinforcer (34) are pressed during operation, the tool being **characterized by** at least one retaining and positioning element that joins the inserts (70) together.

2. Tool according to the preceding claim, **characterized in that** the retaining and positioning element comprises a frame (72) connecting the inserts (70) together and delimiting an outline of the panel (32) of the reinforced panel (30).

3. Tool according to Claim 1, **characterized in that** the retaining and positioning element comprises a backing plate (86) joining the inserts (70) together, said backing plate (86) being configured to be pressed, during the consolidation or polymerization step, against at least one fibre ply or preform (64) that is attached to the bases (44) of the fibre preforms (42) and forms the panel (32) of the reinforced panel.

4. Tool according to the preceding claim, **characterized in that** each insert (70) is connected to the backing plate (86) by a sliding connection so that, for each pair of inserts (70) that are positioned between the same first moulds (68), the inserts (70) are able to move between a separated position and a closed-together position in which the inserts (70) are pressed against the end edge faces (52.1, 52.2) of the flanges (46, 48) of the fibre preforms (42).

5. Tool according to one of the preceding claims, **characterized in that** the tool comprises at least one sealing system (76) providing sealing between the inserts (70) and the first moulds (68).

6. Tool according to the preceding claim, **characterized in that** each insert (70) comprises a contact surface (78) configured to be in contact with one of the end edge faces (52.1, 52.2) of a flange (46, 48) of a fibre preform (42) and with the inclined face (54) situated in the continuation of the end edge face.

7. Tool according to the preceding claim, **characterized in that** the sealing system (76) comprises an elastic coating, with a low expansion coefficient, covering each contact surface (78), which extends on each side of the insert (70) so as to be compressed between the first moulds (68) positioned on each side of the insert (70).

8. Tool according to Claim 6, **characterized in that** the insert (70) is made entirely from an elastic material with a low expansion coefficient.

9. Tool according to one of the preceding claims, **characterized in that** the tool (66) comprises a support (74) on which the inserts (70) as well as the first moulds (68) are positioned.

10. Tool according to the preceding claim, **characterized in that** the support (74) comprises a placement surface (74.1) that has a curvature identical to that of the reinforced panel that is to be produced.
